# DEMANDE DE BREVET EUROPEEN

(11) **EP 2 354 877 A1**
(43) Date de publication de la demande: **10.08.2011**
(21) Numéro de dépôt: 10152408.0
(22) Date de dépôt: 02.02.2010
(51) Int. Cl.: G05D 1/02

(54) **Procédé de commande d'un véhicule à guidage automatique et véhicule associé**

(71) Demandeur: Firac, 78300 Poissy (FR)
(72) Inventeur: Marne, Gérard, 92250 La Garenne-Colombes (FR)
(74) Mandataire: Debay, Yves

(57) **Abrégé**

L'invention concerne un procédé de commande d'un système de guidage d'au moins un véhicule (40) dont le déplacement est commandé de manière automatique le long d'un parcours (20), caractérisé en ce qu'il consiste à disposer au niveau de certaines zones déterminées (21-29) du parcours des étiquettes d'identification par radiofréquence (30), à lire à partir du véhicule en déplacement une information numérique (1-14) mémorisée dans une étiquette et à commander le système de guidage du véhicule en fonction d'au moins une action de routage préétablie à exécuter par le système de guidage du véhicule, correspondant à l'information numérique lue.

## Description

La présente invention concerne le domaine des véhicules à guidage automatique, dits « AGV », selon la terminologie anglo-saxonne pour « Automatically Guided Vehicle ».

L'invention concerne plus particulièrement un procédé de commande d'un système de guidage d'un véhicule dont le déplacement est commandé de manière automatique le long d'un parcours, ainsi qu'un véhicule conçu pour la mise en oeuvre du procédé.

Un AVG, notamment un chariot de manutention, est donc prévu pour se déplacer de manière automatique dans une installation, en suivant un parcours prédéterminé correspondant à un circuit le long duquel certaines opérations doivent être effectuées, telles que des opérations de chargement et de déchargement du chariot au niveau de différents postes de travail disposés successivement le long du parcours.

Les avantages que procurent les chariots de manutention à guidage automatique sont bien connus, notamment dans le domaine de la logistique pour optimiser les flux matériels traités par un processus de production, en permettant de manutentionner du matériel, des outils ou tout autre objet d'un point à un autre dans un atelier.

Le parcours du véhicule est généralement matérialisé par des éléments de guidage. Selon la technologie de guidage automatique employée, il peut s'agir d'un fil conducteur implanté dans le sol et parcouru par un courant électrique variable créant un champ électromagnétique sur le trajet du véhicule, dans le cas d'un véhicule filoguidé, de plots aimantés positionnés dans certaines zones du parcours dans le cas d'un véhicule magnétoguidé, ou bien encore d'une peinture ou d'un ruban réflecteur posé sur le sol dans le cas d'un véhicule optoguidé.

Un système de guidage monté sur le véhicule comporte alors un capteur approprié, prévu pour détecter les éléments en question, fil, plots aimantés, réflecteurs ou peinture, et ainsi commander des organes moteurs du chariot, en sorte de suivre le tracé du parcours matérialisé par les éléments de guidage détectés.

Préalablement à sa mise en fonctionnement automatique, le système de guidage du véhicule est programmé avec des instructions détaillées correspondant au trajet à suivre et aux opérations précises à effectuer le long du parcours, telles que marche, arrêt, ralentir, etc.

Cette programmation des instructions de guidage permettant au véhicule de suivre un trajet défini en y effectuant certaines opérations s'avère cependant complexe dès lors que l'environnement de guidage est situé dans des installations de taille importantes, nécessitant éventuellement plusieurs véhicules en fonctionnement simultanément.

Dans ce contexte, les parcours à mettre en place peuvent comprendre des aiguillages multiples, qui nécessitent alors de faire le choix pour le véhicule d'une direction à prendre, ou encore des carrefours ou des convergences de deux ou plusieurs traces, qui nécessitent alors de gérer des priorités entre les véhicules pour éviter les collisions.

Un parcours de guidage est en outre amené à évoluer au cours de la durée de vie d'une installation, de même que les opérations à effectuer par chaque véhicule.

Un but visé par l'invention est de prévoir un procédé de commande d'un véhicule dont le déplacement est commandé automatiquement le long d'un parcours, qui est d'une très grande simplicité de mise en oeuvre, y compris dans des applications complexes, et même si des modifications sont apportées ultérieurement au parcours et/ou aux opérations à effectuer par le véhicule.

Un autre but visé est d'apporter une grande flexibilité dans la gestion du parcours d'un véhicule en facilitant les démarches de modification du parcours et/ou des opérations à effectuer par chaque véhicule.

Un autre but visé est de permettre la mise en oeuvre de telles modifications en temps réel, sans frais supplémentaires, ni interruption de production due par exemple à des travaux d'infrastructure au sol pour l'installation de fils, d'aimants, etc.

Pour tendre vers tout ou partie de ces buts, le procédé de commande selon l'invention, par ailleurs conforme à la définition générique qu'en donne le préambule ci-dessus, est plus particulièrement caractérisé en ce qu'il consiste à disposer au niveau de certaines zones déterminées du parcours des étiquettes d'identification par radiofréquence, à lire à partir du véhicule en déplacement une information numérique mémorisée dans une étiquette et à commander le système de guidage du véhicule en fonction d'au moins une action de routage préétablie à exécuter par le système de guidage du véhicule, correspondant à l'information numérique lue.

Selon un mode de réalisation, on sélectionne au moins une destination pour le véhicule, l'exécution de l'action de routage préétablie étant conditionnée par la vérification préalable de la présence d'un paramètre de destination associé à l'action de routage préétablie et par la comparaison de ce paramètre avec la destination sélectionnée du véhicule.

En particulier, l'action de routage préétablie est systématiquement exécutée si aucun paramètre de destination n'est associé à la dite action.

En particulier, l'action de routage préétablie est exécutée seulement si le paramètre de destination associé à ladite action correspond à la destination sélectionnée du véhicule.

De préférence, le procédé selon l'invention comprend une étape de paramétrage du véhicule, comprenant :
- la programmation d'une table de routage, consistant en une description des actions de routage préétablies associées à chaque information numérique mémorisée dans une étiquette radiofréquence disposée le long du parcours, et
- le téléchargement de la table de routage programmée dans une mémoire du véhicule.

Avantageusement, l'information numérique mémorisée dans chaque étiquette radiofréquence disposée le long du parcours définit un numéro d'étiquette adapté à repérer l'étiquette de manière univoque parmi les autres étiquettes disposées le long du parcours.

De préférence, les étiquettes radiofréquence sont disposées dans une cavité creusée dans le sol sensiblement dans l'axe d'une trace définissant le parcours le long duquel est guidé le véhicule.

De préférence, le véhicule est guidé le long du parcours par optoguidage.

L'invention concerne encore un véhicule à guidage automatique, caractérisé en ce qu'il comprend un lecteur embarqué d'identification par radiofréquence, adapté à obtenir une information numérique mémorisée par une étiquette d'identification radiofréquence et un module de commande d'un système de guidage du véhicule adapté à commander le système de guidage en fonction d'au moins une action de routage préétablie à exécuter par le système de guidage, correspondant à une information numérique obtenue par le lecteur.

En particulier, le véhicule selon l'invention comprend des moyens de sélection d'une destination du véhicule, le module de commande étant adapté à comparer la destination sélectionnée avec un paramètre de destination associé à l'action de routage préétablie, de sorte à commander l'exécution de ladite action seulement lorsque le paramètre de destination est égal à la destination sélectionnée.

Avantageusement, le module de commande comprend des moyens de mémorisation d'une table de routage décrivant des actions de routage préétablies associées à chaque information numérique obtenue par le lecteur embarqué du véhicule.

Avantageusement, le module de commande comprend une interface de communication filaire et/ou sans fil adaptée à télécharger la table de routage.

De préférence, le véhicule selon l'invention est un véhicule optoguidé.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 est une représentation d'un exemple de parcours de guidage avec les bornes de localisation et de routage disposées le long du parcours selon l'invention,
- la figure 2 est une représentation d'un exemple de modification du parcours de guidage selon la figure 1, avec la modification du routage associé, et
- la figure 3 représente un schéma synoptique simplifié d'un véhicule à guidage automatique selon l'invention.

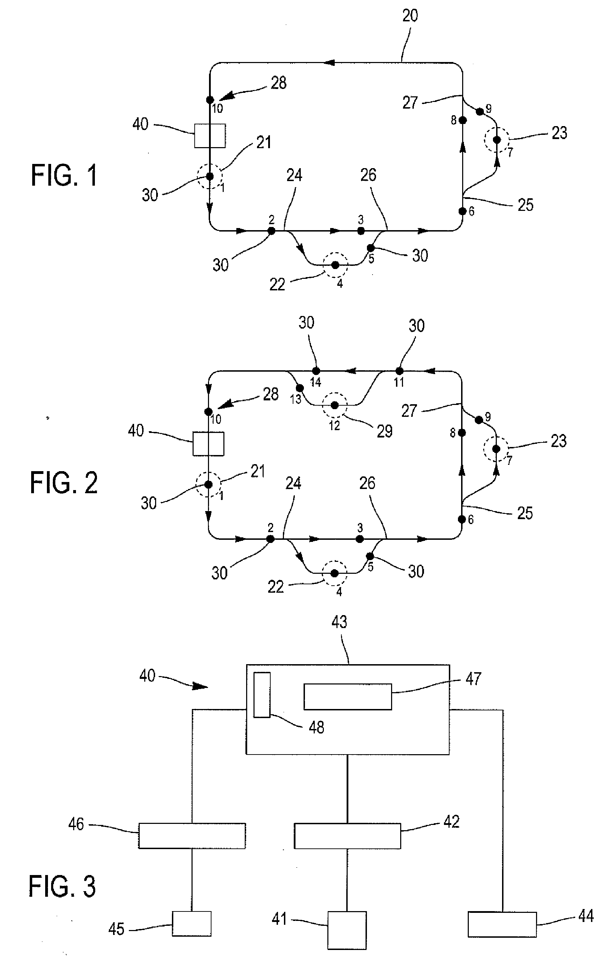

L'installation de guidage automatique de véhicules tels que des chariots de manutention, comprend, dans l'exemple de la figure 1, un chariot 40 se déplaçant dans le sens fléché le long parcours 20 définissant une trajectoire de guidage pour le chariot entre trois postes de travail 21, 22 et 23, respectivement de chargement pour l'un et de déchargement pour les deux autres.

L'installation de guidage du chariot est, selon un mode de réalisation préféré de l'invention, une installation d'optoguidage. Le parcours 20 de guidage du chariot 40 est par exemple réalisé par une trace au sol de peinture noire sur un fond clair, adaptée à être visualisée par une caméra embarquée sur le chariot.

De manière connue en soit, en référence à la figure 3 illustrant un schéma synoptique simplifié d'un chariot 40 conçu pour la mise en oeuvre de la présente invention, la caméra embarquée 41 comprend des moyens d'interprétation 42 de l'image acquise pour indiquer à un module de commande 43 du système de guidage du chariot, de type microcontrôleur, la position de la trace par rapport à son axe. Le système de guidage du chariot peut ainsi corriger la trajectoire du chariot en agissant sur les organes moteurs 44 de ce dernier, de manière à ce que la trace visualisée soit toujours dans l'axe de la caméra.

Le guidage proprement dit du chariot est donc classiquement assuré par optoguidage à l'aide de la caméra embarqué, remplissant alors uniquement la fonction de suivi de la trace.

En complément de ce guidage du chariot par le suivi de la trace à l'aide de la caméra, l'invention prévoit de disposer le long du parcours 20 des bornes de localisation et de routage, représentés sur la figure 1 par des points 30, permettant d'assurer à la fois un repérage du chariot le long du parcours et la gestion des actions à effectuer le long du parcours par le chariot.

Chaque borne 30 comprend une étiquette d'identification par radiofréquence, encore connue sous la dénomination de tag (ou marqueur) RFID (de l'anglais « Radio Frequency Identification »), correspondant à un couple puce/antenne, mémorisant une information numérique destinée à être lue par le chariot lors de son passage à proximité.

Dans la présente application, les tags 30 sont avantageusement des tags lisibles et inscriptibles.

Les informations mémorisées dans les différents tags 30 disposées le long du parcours 20 correspondent à des nombres entiers, définissant des numéros de tag numérotés 1 à 10 selon l'exemple de la figure 1.

On prévoit d'implanter les tags dans une cavité creusée dans le sol sensiblement dans l'axe de la trace définissant le parcours, ou à proximité immédiate de celle-ci, par un simple perçage. Après implantation du tag dans la cavité ainsi creusée, cette dernière peut être rebouchée par exemple par une résine ou un bouchon rentré à force.

L'implantation des tags le long du parcours est ainsi rendue extrêmement simple, rapide et permet avantageusement de faire évoluer l'installation très facilement en fonction des besoins de routage des chariots.

De nouveau en référence à la figure 3, chaque chariot selon l'invention comprend alors un lecteur RFID embarqué, constitué d'un circuit 45 adapté à émettre une énergie électromagnétique à travers une antenne disposée dans la partie basse de son châssis, et d'un module RFID associé 46, qui reçoit et décode les informations envoyées par un tag 30, au fur et à mesure de la progression du chariot le long du parcours.

Le lecteur RFID embarqué sur le chariot est connecté au module de commande 43 du chariot, qui est adapté à traiter les données acquises par le lecteur RFID en fonction d'une table de description des informations stockées dans les tags, dite table de routage, mémorisée dans une mémoire 47 du chariot et à laquelle le module de commande se réfère afin de commander les organes moteurs du chariot en conséquence, comme nous le verrons plus en détail par la suite.

Les tags 30 sont disposés à des emplacements stratégiques du parcours 20, correspondant à chaque endroit du parcours où une action de routage doit être effectuée par le chariot, telle que par exemple :
- devant un aiguillage 24, 25, pour faire le choix d'une direction à prendre,
- au niveau d'un poste de travail 21, 22, 23 pour s'arrêter,
- avant un carrefour 26, 27 (ou une convergence d'au moins deux traces), pour gérer des priorités afin d'éviter des collisions,
- au niveau d'un poste de chargement 21, pour s'arrêter afin de permettre par exemple la sélection d'une destination pour le chariot,
- à un endroit 28 où un changement de vitesse est nécessaire, afin de gérer un ralentissement ou une accélération du chariot par exemple, etc.

De manière générale, on prévoit donc de disposer un tag au niveau de toute zone du parcours nécessitant de prendre une décision quant à une action de routage à effectuer ou non pour un chariot, avant que celui ne traverse la zone en question.

Par action de routage d'un chariot, on entend de manière générale toute action se traduisant par une action de commande quelconque sur les organes moteurs du chariot, telle que tourner à droite, à gauche, s'arrêter, accélérer, ralentir, etc.

Les tags 30 disposés le long du parcours, chacun pouvant être successivement identifié de manière univoque grâce au nombre entier qu'il mémorise, permettent ainsi à un chariot de savoir où il se trouve sur le parcours, de manière analogue à une borne kilométrique le long d'une route, et permettent également de déclencher des actions de routage programmées dans la table de routage téléchargée dans une mémoire du chariot.

Pour lancer un chariot sur le parcours, on peut d'abord sélectionner au moins une destination du chariot. La destination sélectionnée peut correspondre, par exemple, à un poste de déchargement auquel le chariot doit se rendre et peut être sélectionnée par un opérateur à un poste de chargement. La sélection de la destination peut être effectuée par des boutons poussoirs embarqués sur le chariot s'il y a peu de destinations possibles ou via une interface de sélection plus complexe dans le cas de destinations plus nombreuses (par exemple via un lecteur de code barres embarqué sur le chariot).

Lorsque le chariot est lancé, son routage est ensuite géré par l'intermédiaire des tags et de la table de routage à laquelle le module de commande du chariot se réfère afin de savoir quelle action doit être commandée à chaque tag détecté le long du parcours.

La table de routage contient les éléments suivant :

| Numéro de tag | action 1 principale | action 2 secondaire | Paramètre associé | Destination |
|---|---|---|---|---|
| 1 | AR VOP | CHGMT VIT | 25 | |
| 2 | TRN DR | | | 4 |
| 3 | | | | |
| 4 | | | | |
| ... | | | | |

### Numéro de tag :

Les numéros de tag correspondent aux nombres entiers mémorisés dans les tags disposés le long du parcours.

### Actions 1 et 2 :

Les actions 1 et 2 permettent de déterminer les actions de routage que le chariot va effectuer lorsque celui ci va détecter le tag auquel ces actions sont associés.

Ces paramètres sont sélectionnés parmi une liste prédéfinie d'actions que le chariot sait interpréter, telles que par exemple : « arrêt », « ralentir », « accélérer », « tourner à gauche », « tourner à droite », etc.

Pour chaque numéro de tag, deux actions sont par exemple programmées, respectivement une action principale, telle que:
« Arrêt avec redémarrage par validation opérateur » (AR VOP) ;
et une action secondaire, telle que :
« Changement de vitesse au redémarrage » (CHGMT VIT) .

### Paramètre associé :

Le paramètre associé permet de définir certaines valeurs qui peuvent être nécessaires pour effectuer une action. Par exemple, à une action « CHGMT VIT », il faut associer une valeur de vitesse, par exemple 25 m/mn.

Ce paramètre n'est donc à renseigner que pour certaines actions nécessitant une valeur numérique comme « ralentir », « accélérer », « arrêt temporisé », etc.

### Destination :

Le paramètre de destination de la table de routage permet de conditionner l'exécution des actions à effectuer par le chariot à la destination du chariot, qui peut être sélectionnée par l'opérateur à un poste de chargement par exemple.

L'action associée au numéro de tag est ainsi effectuée par le chariot si et seulement si le paramètre de destination associé à l'action dans la table de routage est égal à la destination sélectionnée du chariot.

Si le paramètre de destination n'est pas renseigné pour un numéro donné de tag dans la table de routage, l'action de routage du chariot associée à ce tag est alors systématiquement exécutée. Ce mode opératoire permet donc de réaliser le routage des chariots en fonction des destinations sélectionnées pour le chariot.

Par exemple, en référence au tableau ci-dessus, si au tag n°2 (c'est-à-dire le tag mémorisant la valeur 2) est associée une action « tourner à droite » (TRN DR) et que cette action permet de se rendre à la destination 4 (c'est-à-dire à l'emplacement où est disposé le tag n°4), comme illustré sur le parcours de la figure 1, alors il faut enregistrer la valeur 4 dans le paramètre destination de la table de routage associé au tag n°2.

De cette manière, un chariot lancé sur le parcours, auquel la destination 4 aura été sélectionnée et qui lira le tag n°2, exécutera l'action associée à ce tag et tournera donc à droite. Les autres chariots dont la destination sélectionnée n'est pas la destination 4 et qui liront le tag n°2 ignoreront donc l'action associée au tag n°2 dans la table de routage et iront tout droit.

Ce paramètre de destination est à renseigner dans la table de routage pour chaque tag impliqué dans le routage d'une destination auquel une action telle que « tourner à droite », « tourner à gauche », « arrêt »... est associé.

Toutes les destinations pouvant être sélectionnées par l'opérateur à un point de chargement doivent être prises en compte au niveau de ce paramètre afin que les chariots puissent s'y rendre.

Cependant, on peut aussi envisager, notamment pour des applications plus complexes comportant des arrêts et embranchements multiples, de gérer le routage sans sélectionner de destination pour le chariot.

Dans le cas où l'on ne sélectionne pas de destination mais que l'on utilise un routage préétabli par la table de routage, ce paramètre de destination n'est pas utilisé.

Quoi qu'il en soit, chaque chariot doit donc être paramétré avec la table de routage préalablement à son lancement.

Le paramétrage d'un chariot peut être réalisé à l'aide d'un terminal de paramétrage, par exemple un terminal mobile, adapté à programmer la table de routage et à la télécharger dans le chariot via une connexion au module de commande du chariot, par exemple par une connexion de type Ethernet filaire ou encore via une interface sans fil de type infrarouge ou radiofréquence, le module de commande du chariot étant alors équipé d'une interface de communication correspondante, référencée 48 à la figure 3.

La table de paramétrage est avantageusement programmée une fois sur le terminal de paramétrage, puis téléchargée une fois pour toute dans tous les chariots, au moment de la création du parcours ou après une modification du parcours, afin d'en tenir compte.

La programmation de la table de routage au niveau du terminal de paramétrage se présente sous la forme d'un tableau de type Excel®. La programmation s'effectue de manière très simple et intuitive et consiste alors à sélectionner les cases une par une puis à entrer une valeur numérique ou sélectionner une entrée dans une liste déroulante selon le type d'information requise pour chaque élément de la table de routage, tel que défini plus haut.

Le tableau ci-après donne un exemple de table de routage à programmer et à télécharger dans les chariots, en référence à l'exemple de parcours de la figure 1.

| Numéro de tag | Ordre 1 | Ordre 2 | Paramètre associé | Destination |
|---|---|---|---|---|
| 1 | Chargement | | | |
| 2 | Tourner à droite | | | 4 |
| 3 | Priorité à droite | | | |
| 4 | Arrêt | | | 4 |
| 5 | Prioritaire | | | |
| 6 | Tourner à droite | | | 7 |
| 7 | Arrêt | | | 7 |
| 8 | Priorité à droite | | | |
| 9 | Prioritaire | | | |
| 10 | Ralentir | | 30m/mn | |

Le descriptif fonctionnel accompagnant cette table de routage est le suivant.

Un chariot s'arrête au tag n°1 (point de chargement), l'opérateur charge le chariot puis sélectionne une destination sur le chariot, par exemple la destination 7.

Le chariot démarre, lorsqu'il rencontre le tag n°2, la valeur 2 mémorisée dans ce tag est lue par le lecteur embarqué et le module de commande du chariot se réfère alors à la table de routage préalablement téléchargée dans le chariot et contrôle le paramètre de destination associé au tag n°2 dans la table. Ce paramètre ayant la valeur 4 dans l'exemple, le chariot n'exécute donc pas l'action associée au tag n°2 dans la table de routage (car sa destination est 7), et il continue tout droit sur le parcours.

Lorsque le chariot rencontre le tag n°3, la valeur 3 est lue et le module de commande se rapporte à nouveau à la table de routage. Aucune valeur du paramètre de destination n'étant associée au tag n°3 dans la table de routage, le chariot exécute donc l'action associée au tag n°3, consistant à vérifier qu'il n'y a pas de chariot sur sa droite pour continuer sa progression.

Lorsque le chariot rencontre le tag n°6, le module de commande du chariot commande alors au système de guidage d'exécuter l'action « tourner à droite », car le paramètre de destination associée au tag n°6 dans la table de routage mémorisée est dans ce cas égal à la destination sélectionnée pour le chariot.

Au tag n°7, correspondant à l'emplacement du poste de déchargement 23, le chariot s'arrête car le paramètre de destination associé au tag n°7 dans la table de routage est égal à la destination sélectionnée. L'action « arrêt » est donc exécutée. L'opérateur décharge alors le chariot et appuie par exemple sur un bouton poussoir embarqué « validation opérateur » pour relancer le chariot qui retournera au poste de chargement 21.

Lors de son retour au poste de chargement le chariot lira et exécutera les actions préétablies dans la table de routage dans les mêmes conditions que précédemment.

La figure 2 illustre un exemple d'une modification du parcours de la figure 1, avec modification du routage associé (les éléments en commun avec ceux de la figure 1 portent les mêmes références).

La procédure de modification peut être réalisée très facilement et rapidement, puisqu'elle comprend simplement des étapes de :
- peinture de la nouvelle trace,
- implantation des nouveaux tags,
- paramétrage de l'ensemble des chariots du circuit pour charger la nouvelle table routage programmée.

Une telle procédure peut avantageusement être réalisée tout en maintenant la production au niveau de l'installation.

Selon l'exemple de la figure 2, les modifications de parcours consistent à rajouter un 3ème brin de déchargement au parcours avec un nouveau poste de déchargement 29 et se matérialisent par la disposition des tags suivants au niveau de la nouvelle trace, afin de pouvoir gérer le routage des chariots en conséquence :
tag n°11, qui permet de rajouter l'action de tourner à gauche et de ralentir pour les chariots de cette destination,
tag n°12, qui permet de rajouter l'arrêt au niveau du nouveau poste de déchargement 29,
tag n°13, qui permet de rajouter l'action de gestion de la priorité à droite et d'accélération à 40 m/mn,
tag n°14, qui permet de rajouter l'action de gestion de chariot prioritaire (ralentissement temporaire).

S'en suit la modification de programmation de la table de routage à télécharger dans les chariots :

| Numéro de tag | Ordre 1 | Ordre 2 | Paramètre associé | Destination |
|---|---|---|---|---|
| 1 | Chargement | | | |
| 2 | Tourner à droite | | | 4 |
| 3 | Priorité à droite | | | |
| 4 | Arrêt | | | 4 |
| 5 | Prioritaire | | | |
| 6 | Tourner à droite | | | 7 |
| 7 | Arrêt | | | 7 |
| 8 | Priorité à droite | | | |
| 9 | Prioritaire | | | |
| 10 | Ralentir | | 30m/mn | |
| 11 | Tourner à gauche | Changement de vitesse | 20m/mn | 12 |
| 12 | Arrêt | | | 12 |
| 13 | Priorité à droite | Changement de vitesse | 40m/mn | |
| 14 | Fin de priorité | | | |

Dans cet exemple, il a donc été ajouté une destination (tag n°12) avec un aiguillage puis les tags n°11, n°13 et n°14 nécessaires au bon fonctionnement du circuit, plus précisément :
- le tag n°11 pour gérer l'aiguillage,
- les tags n°13 et n°14 pour gérer les priorités.

Après avoir réalisé la modification du parcours, la table de routage doit être modifiée sur le terminal de paramétrage puis téléchargée dans tous les chariots pour que ceux-ci puissent prendre en compte la modification.

Un chariot qui n'aura pas été modifié ignorera les tags rajoutés sur le parcours.

## Revendications

1. Procédé de commande d'un système de guidage d'au moins un véhicule (40) dont le déplacement est commandé de manière automatique le long d'un parcours (20), **caractérisé en ce qu'**il comprend les opérations consistant à disposer au niveau de certaines zones déterminées (21-29) du parcours des étiquettes d'identification par radiofréquence (30), à lire à partir du véhicule en déplacement une information numérique (1-14) mémorisée dans une étiquette, à commander le système de guidage du véhicule en fonction d'au moins une action de routage préétablie à exécuter par le système de guidage du véhicule, correspondant à l'information numérique lue, et à sélectionner au moins une destination pour le véhicule (40), **en ce que** l'exécution de l'action de routage préétablie est conditionnée par la vérification préalable de la présence d'un paramètre de destination associé à l'action de routage préétablie et par la comparaison de ce paramètre avec la destination sélectionnée du véhicule, et **en ce que** l'action de routage préétablie est systématiquement exécutée si aucun paramètre de destination n'est associé à la dite action.

2. Procédé selon la revendication 1, **caractérisé en ce que** l'action de routage préétablie est exécutée seulement si le paramètre de destination associé à ladite action correspond à la destination sélectionnée du véhicule (40).

3. Procédé selon l'une quelconque des revendications précédentes, **caractérisé en ce qu'**il comprend une étape de paramétrage du véhicule (10), comprenant :
- la programmation d'une table de routage, consistant en une description des actions de routage préétablies associées à chaque information numérique mémorisée dans une étiquette radiofréquence (30) disposée le long du parcours, et
- le téléchargement de la table de routage programmée dans une mémoire (47) du véhicule (40).

4. Procédé selon l'une quelconque des revendications précédentes, **caractérisé en ce que** l'information numérique mémorisée dans chaque étiquette radiofréquence disposée le long du parcours définit un numéro d'étiquette adapté à repérer l'étiquette de manière univoque parmi les autres étiquettes disposées le long du parcours.

5. Procédé selon l'une quelconque des revendications précédentes, **caractérisé en ce que** les étiquettes radiofréquence sont disposées dans une cavité creusée dans le sol sensiblement dans l'axe d'une trace définissant le parcours le long duquel est guidé le véhicule.

6. Procédé selon l'une quelconque des revendications précédentes, **caractérisé en ce que** le véhicule (40) est guidé le long du parcours par optoguidage.

7. Véhicule (40) à guidage automatique, **caractérisé en ce qu'**il comprend :
- un lecteur embarqué d'identification par radiofréquence (45, 46), adapté à obtenir une information numérique mémorisée par une étiquette d'identification radiofréquence,
- un module de commande (43) d'un système de guidage du véhicule adapté à commander le système de guidage en fonction d'au moins une action de routage préétablie à exécuter par le système de guidage, correspondant à une information numérique obtenue par le lecteur, et des moyens de sélection d'une destination du véhicule, le module de commande étant adapté à comparer la destination sélectionnée avec un paramètre de destination associé à l'action de routage préétablie, de sorte à commander l'exécution de ladite action seulement lorsque le paramètre de destination est égal à la destination sélectionnée.

8. Véhicule selon la revendication 7, **caractérisé en ce que** le module de commande comprend des moyens de mémorisation (47) d'une table de routage décrivant des actions de routage préétablies associées à chaque information numérique obtenue par le lecteur embarqué du véhicule.

9. Véhicule selon la revendication 8, **caractérisé en ce que** le module de commande comprend une interface (48) de communication filaire et/ou sans fil adaptée à télécharger la table de routage.

10. Véhicule selon l'une quelconque des revendications 7 à 9, **caractérisé en ce qu'**il s'agit d'un véhicule optoguidé.
